# EUROPÄISCHE PATENTSCHRIFT

(11) **EP 2 674 023 B1**
(45) Veröffentlichungstag und Bekanntmachung des Hinweises auf die Patenterteilung: **14.06.2017**
(21) Anmeldenummer: 13162671.5
(22) Anmeldetag: 08.04.2013
(51) Int. Cl.: A01D 89/00, A01D 90/02

(54) **Aufnahmevorrichtung für eine landwirtschaftliche Erntemaschine**
Pick up device for an agricultural harvesting machine
Dispositif de ramassage pour machine agricole de récolte

(30) Priorität: 12.06.2012 DE 102012011475
(43) Veröffentlichungstag der Anmeldung: 18.12.2013
(73) Patentinhaber: Usines Claas France S.A.S, 57140 St. Rémy / Woippy (FR)
(72) Erfinder: Scharf, Thorsten, 66693 Orscholz (DE)
(74) Vertreter: Budach, Steffen

(56) Entgegenhaltungen:
- EP-A1- 1 790 206
- DE-A1- 19 750 954
- DE-A1-102007 031 211
- US-A1- 2008 264 028

## Beschreibung

Die vorliegende Erfindung betrifft eine Aufnahmevorrichtung für eine landwirtschaftliche Erntemaschine zum Aufsammeln von am Boden liegenden Erntegut, insbesondere bereits gemähtem und geschwadetem Erntegut wie etwa Heu oder Stroh.

Eine solche auch als Pickup bezeichnete Aufnahmevorrichtung umfasst herkömmlicherweise eine mit abstehenden Zinken besetzte Aufsammeltrommel, die um eine horizontale Achse drehangetrieben ist, so dass ihre Zinken über den Boden streichen und dabei das Erntegut vor sich herschieben und es schließlich, im Laufe ihrer Drehung um die Achse, anheben. Fliehkraft und die nach dem Erfassen des Ernteguts zunächst zum Boden hin abschüssige Orientierung der Zinken führen dazu, dass ein Teil des von den Zinken erfassten Ernteguts nicht sofort von der Aufsammeltrommel mitgenommen wird, sondern von den Zinken abgleitet und vor der Aufsammeltrommel wieder zu Boden fällt. Wenn die Aufnahmevorrichtung über eine abzusammelnde Bodenfläche geführt wird, staut das Erntegut sich deshalb zunächst vor der Aufsammeltrommel, und erst wenn die Schicht des Ernteguts vor der Aufsammeltrommel dick genug ist, d.h. wenn das Erntegut in etwa bis hin die Höhe von deren Drehachse reicht, wird es effizient aufgesammelt.

Um die Effizienz des Aufsammelvorgangs zu verbessern und insbesondere die Menge des Ernteguts zu verringern, die von den rotierenden Zinken lediglich nach vorn geschleudert wird, ohne aufgenommen zu werden, ist es bekannt, die Aufsammeltrommel mit einem Niederhalter zu kombinieren, der sich über der Aufsammeltrommel erstreckt, um das Abschleudern von Erntegut zu verhindern und im Zusammenwirken mit der rotierenden Aufsammeltrommel das Erntegut einem Erntegutkanal zuzuführen. Um den Eintritt des Ernteguts in den Kanal zu erleichtern und einen reibungsarmen, glatten Ernteguttransport zu ermöglichen, kann ein solcher Niederhalter, wie z.B. in EP 1 790 206 A1 gezeigt, eine oder mehrere Rollen aufweisen, die den Erntegutkanal begrenzen und von dem hindurchgeförderten Erntegut durch Reibkontakt mitgenommen werden können. Zwar ist mit Hilfe dieser Niederhalterrollen bereits eine erheblich sicherere und gleichmäßigere Aufnahme des Ernteguts erreichbar, als mit einem plattenartigen Niederhalter, doch können sich, insbesondere zu Beginn eines Aufnahmevorgangs, nach wie vor Störungen ereignen, die zu einer Verstopfung des Erntegutkanals führen.

Aus der US 20080264028 A1 ist eine Ballenpresse mit einer Vorrichtung zum Aufsammeln von Erntegut, einer sogenannten Pick-up, bekannt, wobei oberhalb und vor der Pick-up ein angetriebener Rotor vorgesehen ist, der die Pick-up bei der Förderung des Erntegutes unterstützt.

Aufgabe der Erfindung ist daher, die Betriebssicherung einer solchen Aufnahmevorrichtung weiter zu verbessern.

Die Aufgabe wird gelöst, indem bei einer Aufnahmevorrichtung für eine landwirtschaftliche Erntemaschine mit einer Aufsammeltrommel und wenigstens einer Niederhalterrolle, wobei die Aufsammeltrommel drehangetrieben und angeordnet ist, um durch ihre Drehung das Erntegut vom Boden abzuheben und einem von ihr und der Niederhalterrolle begrenzten Erntegutkanal zuzuführen, eine Drehzahl, mit der die Niederhalterrolle drehangetrieben ist, in Abhängigkeit von der Drehzahl der Aufsammeltrommel variabel ist.

Wenn eine Niederhalterrolle in herkömmlicher Weise nicht angetrieben ist, dann ist sie zu Beginn eines Aufsammelvorgangs in Ruhe, und um sie in eine den Durchgang des Ernteguts durch den Kanal vergleichmäßigende Drehung zu versetzen, bedarf es einer gewissen Zeit, in der das Erntegut an der Niederhalterrolle vorbeigeschoben wird und diese dabei durch Reibung beschleunigt. Solange jedoch die Drehgeschwindigkeit der Niederhalterrolle noch gering ist, unterscheidet ihre Wirkung sich kaum von der einer stationären Platte, und die zwischen ihr und dem Erntegut auftretende Reibung kann dazu führen, dass sich das Erntegut staut und den Kanal verstopft. Indem jedoch erfindungsgemäß auch die Niederhalterrolle drehangetrieben ist und ihre Drehzahl an die der Aufsammeltrommel gekoppelt ist, werden Zeiten, in denen die Geschwindigkeit der Niederhalterrolle nicht an die des an ihr vorbei geförderten Ernteguts angepasst ist und Reibung zwischen ihr und dem Erntegut dessen Transport behindern kann, vermieden.

Vorzugsweise sind die Aufsammeltrommel und die Niederhalterrolle über einen gemeinsamen Versorgungsweg mit Antriebsenergie versorgt. So muss, wenn die Aufnahmevorrichtung an einer Erntemaschine wie etwa einem Schlepper, einer Ballenpresse oder dergleichen montiert wird, nur ein einziger Versorgungsanschluss angekoppelt werden, was einen schnellen Anund Abbau der Aufnahmevorrichtung ermöglicht.

Der gemeinsame Versorgungsanschluss schafft darüber hinaus die Möglichkeit, durch Variieren der dort eingespeisten Antriebsleistung die Drehzahlen von Aufsammeltrommel und Niederhaltertrommel in einem festen Proportionalitätsverhältnis zu einander zu verändern.

Um den Strom des Ernteguts zu optimieren, kann es hilfreich sein, wenn die Aufnahmevorrichtung ein Stellelement zum Verstellen des Proportionalitätsverhältnisses aufweist.

Der oben erwähnte Versorgungsweg kann insbesondere eine Hydraulikleitung umfassen, die wenigstens einen Aufsammeltrommel und Niederhalterrolle antreibenden Hydromotor speist.

Wenn Aufsammeltrommel und Niederhalterrolle jeweils einen eigenen Hydromotor aufweisen, dann ist eine Proportionalität der Drehzahlen von Aufsammeltrommel und Niederhalterrolle auf einfache Weise durch eine Reihenverbindung der beiden Hydromotoren erreichbar.

Das Proportionalitätsverhältnis der Drehzahlen kann, wenn gewünscht, verändert werden, wenn die Schluckmenge wenigstens eines dieser Hydromotoren veränderbar ist.

Ein Rückschlagventil kann in Reihe mit einem der Hydromotoren und parallel zum anderen Hydromotor angeordnet sein. Wenn die Flussrichtung des am Hydraulikanschluss zugeführten Hydraulikfluids invertiert wird, dann bewirkt das Rückschlagventil, dass nur einer der beiden Hydromotoren tatsächlich angetrieben wird, um steckengebliebenes Erntegut aus den Erntegutkanal wieder herauszuschieben, wohingegen der andere Hydromotor freiläuft und allenfalls über das Erntegut selber angeschoben wird.

Vorzugsweise ist das Rückschlagventil in Reihe mit dem Hydromotor der Niederhalterrolle und parallel zu dem der Aufsammeltrommel angeordnet.

Der Versorgungsanschluss kann ein Zapfwellenanschluss sein. Über diesen kann eine Pumpe angetrieben sein, die wiederum die oben erwähnten Hydromotoren versorgt. Alternativ kann ein mechanisches Getriebe die Verteilung der Antriebsenergie auf Niederhalterrolle und Aufsammeltrommel bewirken. Um das Drehzahlverhältnis zwischen Aufsammeltrommel und Niederhalterrolle zu variieren, kann ein solches Getriebe als Schaltgetriebe oder als kontinuierlich variables Getriebe ausgeführt sein.

Zur Anpassung an Menge und mechanische Eigenschaften des Ernteguts kann ein Stellglied vorgesehen sein, das den Abstand des Niederhalters von der Aufsammeltrommel steuert.

Der Niederhalter kann eine hintere Niederhalterrolle, Arme, die die hintere Niederhalterrolle an ein Gestell der Aufnahmevorrichtung anlenken, und eine mit den Armen gelenkig verbundene vordere Niederhalterrolle umfassen. Indem dadurch die vordere unabhängig von der hinteren Niederhalterrolle einstellbar ist, ist die Anpassung an unterschiedliche Verarbeitungseigenschaften des einzusammelnden Ernteguts erleichtert.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen schematischen Längsschnitt durch eine Aufnahmevorrichtung gemäß der vorliegenden Erfindung;
- Fig. 2: eine Draufsicht auf die Aufnahmevorrichtung; und
- Fig. 3: ein Hydraulikdiagramm der Aufnahmevorrichtung.

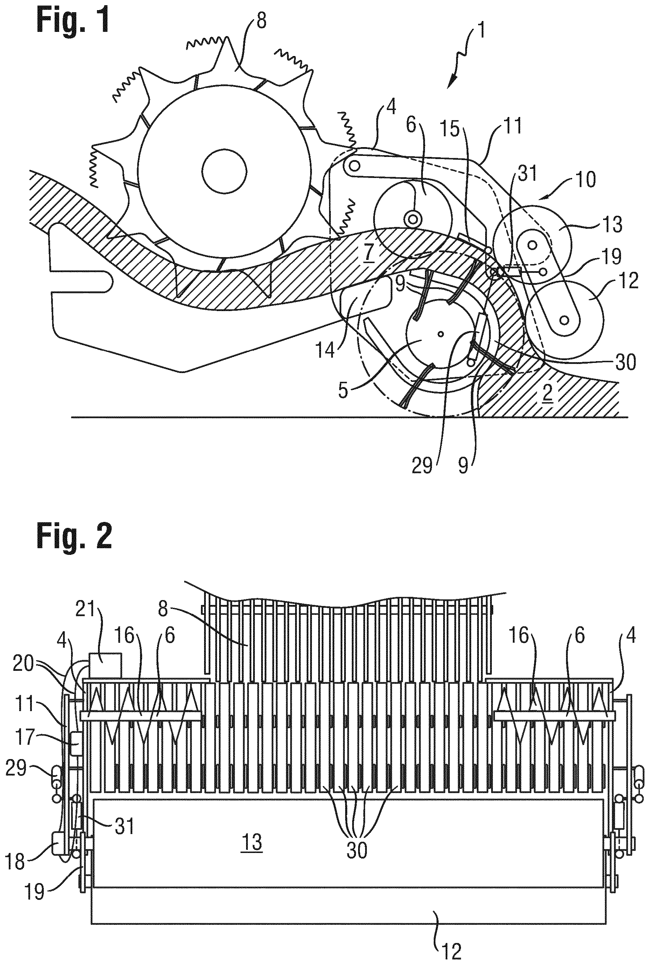

Fig. 1 zeigt eine erfindungsgemäße Aufnahmevorrichtung in einem schematischen Längsschnitt. Die Aufnahmevorrichtung 1 ist an einer landwirtschaftlichen Erntemaschine, z.B. einem Schlepper, einer Ballenpresse, einem Feldhäcksler oder dergleichen, montiert, um von diesem in Richtung der Schnittebene über eine mit aufzusammelnden Erntegut 2 bedeckte Bodenfläche 3 geführt zu werden. Die Aufnahmevorrichtung 1 umfasst eine zwischen Seitenwandplatten 4 eines lösbar an der Erntemaschine befestigten Gestells drehbar gelagerte Aufsammeltrommel 5, eine Schnecke 6 und einen Niederhalter 10. Von der landwirtschaftlichen Erntemaschine, hier einer Ballenpresse, ist in Fig. 1 nur ein kleiner Teil, insbesondere ein Schneidrotor 8 zum Zerkleinern des von der Aufnahmevorrichtung zugeführten Ernteguts, zu sehen.

Die Aufsammeltrommel 5 ist über ihre gesamte Länge verteilt mit radial abstehenden Zinken 9 besetzt. Die Zinken 9 können an einem Mantel der Aufsammeltrommel 5 starr befestigt sein; sie können auch gekoppelt an die Drehung der Aufsammeltrommel 5 relativ zu deren Mantel beweglich sein, um etwa, wenn sie sich an einer der Bodenfläche 3 zugewandten Seite des Trommelmantels befinden, weit vorzuspringen und sich im Laufe der weiteren Drehung allmählich in die Trommel zurückzuziehen und so die Freigabe von mitgenommenem Erntegut und dessen Weiterleitung in den Erntegutkanal 7 an einer Oberseite der Aufsammeltrommel 5 zu erleichtern, oder um, wie in der Fig. 1 gezeigt, einen die Seitenwandplatten 4 verbindenden Querträger 14 des Gestells passieren zu können. An der Trommel sind in deren Längsrichtung gestaffelt zahlreiche - hier im Querschnitt hufeisenförmige - Abstreiferelemente 30 angeordnet, die das Erntegut auf seinem Weg durch den Erntegutkanal 7 führen und zwischen einander Spalte begrenzen, durch die die Zinken 9 in den Erntegutkanal 7 eingreifen.

Der Niederhalter 10 begrenzt einen Eingangsbereich des Erntegutkanals 7 oberhalb der Aufsammeltrommel 5. Er umfasst zwei um eine Achse schwenkbar an den Seitenwandplatten 4 montierte Arme 11, eine zwischen diesen Armen montierte hintere Niederhalterrolle 13 und eine vordere Niederhalterrolle 12, die an die Arme 11 über zwei um die Achse der Niederhalterrolle 13 schwenkbare Träger 19 angelenkt ist.

Zwei hydraulische Stellglieder 29 greifen einerseits an den Seitenwandplatten 4 und andererseits an den Armen 11 an, um den Abstand des Niederhalters 10 von der Aufsammeltrommel 5 einzustellen. Zwei weitere Stellglieder 31 verbinden die Arme 11 mit den Trägern 19. Sie erlauben es, den Abstand der vorderen Niederhalterrolle 12 von der Aufsammeltrommel 5 unabhängig vom Abstand zwischen der hinteren Niederhalterrolle 13 und der Aufsammeltrommel 5 zu variieren und so die Aufnahmevorrichtung für die Aufnahme von Erntegut mit unterschiedlichen mechanischen Eigenschaften wie Elastizität, Sprödigkeit, Stauchbarkeit zu optimieren.

Der Niederhalter 10 kann ferner ein Niederhalterblech aufweisen, das den Zwischenraum zwischen den Niederhalterrollen 12, 13 ausfüllt, falls dies erforderlich ist, um zu verhindern, dass Erntegut im Zwischenraum zwischen den Niederhalterrollen 12, 13 hängenbleibt oder durch diesen entweicht. Außerdem kann ein Stabgitter 15 den Abstand zwischen der Niederhalterrolle 13 und der Schnecke 6 überbrücken.

Wie in der Draufsicht der Fig. 2 deutlich wird, besteht die Schnecke 6 aus zwei jeweils einseitig fliegend an den Seitenwandplatten 4 gelagerten, mit zueinander spiegelbildlichen Wendeln 16 besetzten Teilen, durch deren Drehung das von der Aufsammeltrommel 5 über die gesamte Breite der Aufnahmevorrichtung 1 hinweg aufgesammelte Erntegut von den Seitenwandplatten 4 zur Mitte der Aufnahmevorrichtung 1 zusammengeschoben wird, um anschließend an den erheblich kürzeren Schneidrotor 8 übergeben zu werden. Alternativ könnten auch zwei spiegelbildliche Wendeln an einem sich durchgehend zwischen den Seitenwandplatten 4 erstreckenden Kern vorgesehen sein.

Zwei Hydromotoren 17, 18 sind koaxial zur Aufsammeltrommel 5 und zur hinteren Niederhalterrolle 13 an einer der Seitenwandplatten 4 bzw. der Seitenwände 11 montiert, um die Aufsammeltrommel 5 bzw. die Niederhalterrolle 13 direkt anzutreiben. Die vordere Niederhalterrolle 12, die an die Arme 11 über zwei um die Achse der Niederhalterrolle 13 schwenkbare Träger 19 angelenkt ist, ist von dem Hydromotor 18 mittelbar, z.B. über eine in dem Träger 19 umlaufende Kette, angetrieben.

Eine Hydraulikölleitung 20 verbindet die Hydromotoren 17, 18 in Reihe mit einer Pumpe 21, die von der Erntemaschine aus mechanisch, z.B. über eine Zapfwelle, angetrieben ist.

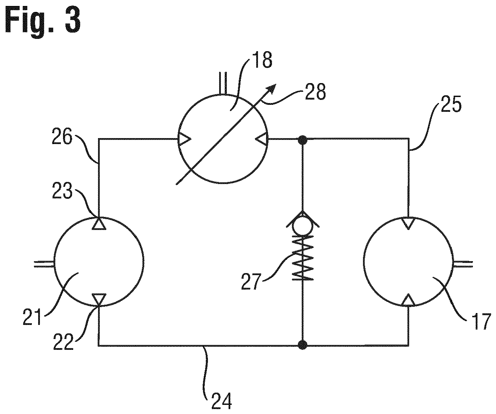

Fig. 3 zeigt schematisch das Hydrauliksystem der Aufnahmevorrichtung 1. Die Pumpe 21 umfasst zwei Anschlüsse 22, 23, zwischen denen die Hydromotoren 17, 18 über Abschnitte 24, 25, 26 der Leitung 20 in Reihe verbunden sind. Ein Rückschlagventil 27 ist parallel zum Hydromotor 17 zwischen die Leitungsabschnitte 24, 25 geschaltet und so orientiert, dass es bei normalem Betrieb, wenn der Öldruck auf dem Leitungsabschnitt 24 höher ist als auf dem Abschnitt 25, sperrt. In diesem Zustand rotieren bezogen auf die Darstellung der Fig. 1 die Aufnahmetrommel 5 im Uhrzeigersinn und die Niederhalterrollen 12, 13 im Gegenuhrzeigersinn, um das Erntegut 2 vom Boden 3 aufzunehmen und dem Erntegutkanal 7 zuzuführen.

Wenn das Erntegut den Erntegutkanal 7 blockiert, kann der Fahrer des Trägerfahrzeugs mit Hilfe einer nicht dargestellten, trägerfahrzeugseitigen Schaltvorrichtung die Drehrichtung der die Pumpe 21 antreibenden Zapfwelle umkehren. In diesem Fall fließt das Öl vom Anschluss 23 über den Hydromotor 18 und überwiegend über das Rückschlagventil 27 zum Anschluss 22. Indem so nur die Niederhalterrollen 12, 13 angetrieben sind, sind die Zinken 9 der Aufsammeltrommel 5 vor einer Beschädigung durch Überbeanspruchung geschützt.

Wenn durch die so angetriebene Drehung der Niederhalterrollen 12, 13 im Uhrzeigersinn Erntegut aus dem Kanal 7 entgegen der normalen Förderrichtung wieder hinausgeschoben wird, sind die Zinken 9 jedoch frei, dem Druck des Ernteguts nachzugeben, indem die Aufnahmetrommel 5 im Gegenuhrzeigersinn rotiert. Die Drehung der Aufnahmetrommel 5 wird durch die Druckverhältnisse in der Leitung 20 nicht behindert; sie bewirkt lediglich, dass ein Teil des zirkulierenden Öls nicht durch das Rückschlagventil 27, sondern durch den Hydromotor 17 fließt.

Das Rückschlagventil 27 kann gleichzeitig die Funktion einer Drossel oder eines Druckentlastungsventils haben. Eine daraus resultierende Druckdifferenz zwischen den Leitungsabschnitten 24, 25 erleichtert die Drehung der Aufsammeltrommel 5 im Gegenuhrzeigersinn oder kann sogar dazu führen, dass die Zinken 9 ihrerseits einen Schub auf das Erntegut im Kanal 7 ausüben, doch kann diese Druckdifferenz niedrig genug bemessen werden, um eine Beschädigung der Zinken 9 im Falle einer Blockade durch das Erntegut sicher auszuschließen.

Wenn die Schluckmenge beider Hydromotoren 17, 18 fest ist, dann stehen auch die Drehzahlen von Aufsammeltrommel 5 und Niederhalterrollen 12, 13 in einem festen Verhältnis. Die Drehzahlen selber sind proportional zur Rate, mit der das Öl vom Trägerfahrzeug aus eingespeist wird.

Am Hydromotor 18 kann ein von Hand betätigbares Stellelement 28 zum Verstellen der Schluckmenge vorgesehen sein; es bietet die Möglichkeit, das Drehzahlverhältnis von Aufsammeltrommel 5 und Niederhalterrollen 12, 13 so abzustimmen, dass optimale Förderergebnisse erzielt werden.

### Bezugszeichen

- 1: Aufnahmevorrichtung
- 2: Erntegut
- 3: Bodenfläche
- 4: Seitenwandplatte
- 5: Aufsammeltrommel
- 6: Schnecke
- 7: Erntegutkanal
- 8: Schneidrotor
- 9: Zinken
- 10: Niederhalter
- 11: Arm
- 12: Niederhalterrolle
- 13: Niederhalterrolle
- 14: Querträger
- 15: Stabgitter
- 16: Wendel
- 17: Hydraulikmotor
- 18: Hydraulikmotor
- 19: Träger
- 20: Hydraulikölleitung
- 21: Pumpe
- 22: Anschluss
- 23: Anschluss
- 24: Leitungsabschnitt
- 25: Leitungsabschnitt
- 26: Leitungsabschnitt
- 27: Rückschlagventil
- 28: Stellelement
- 29: Stellglied
- 30: Abstreiferelement
- 31: Stellglied

## Patentansprüche

1. Aufnahmevorrichtung für eine landwirtschaftliche Erntemaschine zum Aufsammeln von am Boden liegendem Erntegut, mit einer Aufsammeltrommel (5) und wenigstens einer Niederhalterrolle (12, 13), wobei die Aufsammeltrommel (5) drehangetrieben und angeordnet ist, um durch ihre Drehung das Erntegut vom Boden (3) abzuheben und einem von ihr und der Niederhalterrolle (12, 13) begrenzten Erntegutkanal (7) zuzuführen, wobei eine Drehzahl, mit der die Niederhalterrolle (12, 13) drehangetrieben ist, in Abhängigkeit von der Drehzahl der Aufsammeltrommel (5) variabel ist, wobei die Aufsammeltrommel (5) und die Niederhalterrolle (12, 13) über einen gemeinsamen Versorgungsweg mit Antriebsenergie versorgt sind, **dadurch gekennzeichnet, dass** der Versorgungsweg eine Hydraulikleitung (20) umfasst, über die ein Hydromotor (17) der Aufsammeltrommel (5) und ein Hydromotor (18) der Niederhalterrolle (12, 13) in Reihe verbunden sind, und ein Rückschlagventil (27) in Reihe mit einem der Hydromotoren (18) und parallel zum anderen Hydromotor (17) angeordnet ist.

2. Aufnahmevorrichtung nach Anspruch 1, **dadurch gekennzeichnet, dass** der Versorgungsweg eine Hydraulikleitung (20) umfasst, die wenigstens zwei, eine Aufsammeltrommel (5) und Niederhalterrolle (12, 13) antreibende Hydromotoren (17, 18) speist.

3. Aufnahmevorrichtung nach Anspruch 1, **dadurch gekennzeichnet, dass** die Schluckmenge wenigstens eines (18) der Hydromotoren veränderbar ist.

4. Aufnahmevorrichtung nach Anspruch 1, **dadurch gekennzeichnet, dass** das Rückschlagventil (27) in Reihe mit dem Hydromotor (18) der Niederhalterrolle (12, 13) und parallel zum Hydromotor (18) der Aufsammeltrommel (5) angeordnet ist.

5. Aufnahmevorrichtung nach Anspruch 1 oder 2, **dadurch gekennzeichnet, dass** der Versorgungsweg einen Zapfwellenanschluss umfasst.

6. Aufnahmevorrichtung nach einem der Ansprüche 1 bis 5, **dadurch gekennzeichnet, dass** durch Variieren der an dem Versorgungsanschluss (21) eingespeisten Antriebsleistung die Drehzahlen von Aufsammeltrommel (5) und Niederhalterrolle (12, 13) in einem festen Proportionalitätsverhältnis veränderbar sind.

7. Aufnahmevorrichtung nach Anspruch 6, **gekennzeichnet durch** ein Stellelement (28) zum Verstellen des Proportionalitätsverhältnisses.

8. Aufnahmevorrichtung nach einem der Ansprüche 1 bis 7, **gekennzeichnet durch** ein den Abstand des Niederhalters (10) von der Aufsammeltrommel (5) steuerndes Stellglied (29).

9. Aufnahmevorrichtung nach einem der vorhergehenden Ansprüche, **dadurch gekennzeichnet, dass** der Niederhalter (10) eine hintere Niederhalterrolle (13), Arme (11), die die hintere Niederhalterrolle (13) an ein Gestell (4, 14) der Aufnahmevorrichtung anlenken, und eine mit den Armen (11) gelenkig verbundene vordere Niederhalterrolle (12) umfasst.

## Claims

1. A pickup apparatus for an agricultural harvester for collecting crop material lying on the ground, comprising a collecting drum (5) and at least one hold-down roller (12, 13), wherein the collecting drum (5) is driven in rotation and arranged to lift the crop material off the ground (3) by virtue of its rotation and to feed it to a crop material passage (7) defined by it and the hold-down roller (12, 13), wherein a speed of rotation at which the hold-down roller (12, 13) is driven in rotation is variable in dependence on the speed of rotation of the collecting drum (5), wherein the collecting drum (5) and the hold-down roller (12, 13) are supplied with drive power by way of a common supply path, **characterised in that** the supply path includes a hydraulic line (20) by way of which a hydraulic motor (17) of the collecting drum (5) and a hydraulic motor (18) of the hold-down roller (12, 13) are connected in series, and a non-return valve (27) is arranged in series with one of the hydraulic motors (18) and parallel to the other hydraulic motor (17).

2. A pickup apparatus according to claim 1 **characterised in that** the supply path includes a hydraulic line (20) which feeds at least two hydraulic motors (17, 18) driving a collecting drum (5) and a hold-down roller (12, 13).I

3. A pickup apparatus according to claim 1 **characterised in that** the intake amount of at least one (18) of the hydraulic motors is variable.

4. A pickup apparatus according to claim 1 **characterised in that** the non-return valve (27) is arranged in series with the hydraulic motor (18) of the hold-down roller (12, 13) and parallel to the hydraulic motor (18) of the collecting drum (5).

5. A pickup apparatus according to claim 1 or claim 2 **characterised in that** the supply path includes a power take-off connection.

6. A pickup apparatus according to one of claims 1 to 5 **characterised in that** the speeds of rotation of the collecting drum (5) and the hold-down roller (12, 13) are variable in a fixed proportionality ratio by varying the drive power fed to the supply connection (21).

7. A pickup apparatus according to claim 6 **characterised by** an adjusting element (28) for adjusting the proportionality ratio.

8. A pickup apparatus according to one of claims 1 to 7 **characterised by** an adjusting member (29) for controlling the spacing of the hold-down means (10) from the collecting drum (5).

9. A pickup apparatus according to one of the preceding claims **characterised in that** the hold-down means (10) includes a rear hold-down roller (13), arms (11) which pivotably connect the rear hold-down roller (13) to a frame structure (4, 14) of the pickup apparatus, and a front holddown roller (12) hingedly connected to the arms (11).

## Revendications

1. Dispositif récepteur pour une machine agricole de récolte, destiné à ramasser du produit de récolte couché sur le sol, comprenant un tambour ramasseur (5) et au moins un rouleau tasseur (12, 13), le tambour ramasseur (5) étant entraîné en rotation et disposé pour, par sa rotation, soulever le produit de récolte du sol (3) et l'amener à un canal de produit de récolte (7) délimité par lui-même et par le rouleau tasseur (12, 13), une vitesse de rotation à laquelle le rouleau tasseur (12, 13) est entraîné étant variable en fonction de la vitesse de rotation du tambour ramasseur (5), le tambour ramasseur (5) et le rouleau tasseur (12, 13) étant alimentés en énergie d'entraînement par l'intermédiaire d'un moyen de fourniture commun, **caractérisé en ce que** le moyen de fourniture comprend une conduite hydraulique (20) par l'intermédiaire de laquelle un moteur hydraulique (17) du tambour ramasseur (5) et un moteur hydraulique (18) du rouleau tasseur (12, 13) sont reliés en série, et **en ce qu'**une valve anti-retour (27) est montée en série avec un des moteurs hydrauliques (18) et en parallèle avec l'autre moteur hydraulique (17).

2. Dispositif récepteur selon la revendication 1, **caractérisé en ce que** le moyen de fourniture comprend une conduite hydraulique (20) qui alimente au moins deux moteurs hydrauliques (17, 18) entraînant un tambour ramasseur (5) et un rouleau tasseur (12, 13).

3. Dispositif récepteur selon la revendication 1, **caractérisé en ce que** la quantité absorbée par au moins un (18) des moteurs hydrauliques est variable.

4. Dispositif récepteur selon la revendication 1, **caractérisé en ce que** la valve anti-retour (27) est montée en série avec le moteur hydraulique (18) du rouleau tasseur (12, 13) et en parallèle avec le moteur hydraulique (18) du tambour ramasseur (5).

5. Dispositif récepteur selon la revendication 1 ou 2, **caractérisé en ce que** le moyen de fourniture comprend un accouplement d'arbre de prise de force.

6. Dispositif récepteur selon une des revendications 1 à 5, **caractérisé en ce que** la vitesse de rotation du tambour ramasseur (5) et celle du rouleau tasseur (12, 13) peuvent être modifiées dans un rapport de proportionnalité fixe en faisant varier la puissance d'entraînement amenée à l'accouplement d'alimentation (21).

7. Dispositif récepteur selon la revendication 6, **caractérisé par** un élément de positionnement (28) pour régler le rapport de proportionnalité.

8. Dispositif récepteur selon une des revendications 1 à 7, **caractérisé par** un organe de positionnement (29) commandant l'écartement du tasseur (10) par rapport au tambour ramasseur (5).

9. Dispositif récepteur selon une des revendications précédentes, **caractérisé en ce que** le tasseur (10) comprend un rouleau tasseur arrière (13), des bras (11), qui articulent le rouleau tasseur arrière (13) sur un bâti (4, 14) du dispositif récepteur, et un rouleau tasseur avant (12) relié aux bras (11) de manière articulée.
